# EUROPEAN PATENT APPLICATION

(11) **EP 4 495 206 A1**
(43) Date of publication of application: **22.01.2025**
(21) Application number: 24189232.2
(22) Date of filing: 17.07.2024
(51) Int. Cl.: C09K 5/04

(54) **LOW GWP REFRIGERANT COMPOSITIONS**

(30) Priority: 21.07.2023 US 202318356593
(71) Applicant: Thermo King LLC, Minneapolis, MN 55420 (US)
(72) Inventor: PETERSEN, Michael, Apple Valley, Minnesota 55124 (US); KUJAK, Stephen A, Brownsville, Minnesota 55919 (US)
(74) Representative: Haseltine Lake Kempner LLP

(57) **Abstract**

The refrigerant composition includes R1150 refrigerant, R170 refrigerant, and a third refrigerant. The third refrigerant is one of R1132a refrigerant and R1270 refrigerant. A method of making a refrigerant composition for an HVACR system includes mixing an amount of R1150 refrigerant, an amount of R170 refrigerant, and an amount of the third refrigerant. A method of retrofitting an existing refrigerant composition in an HVACR system includes adding at least one of R1150 refrigerant, R170 refrigerant, and a third refrigerant to the existing refrigerant composition to obtain a retrofit refrigerant composition.

## Description

### FIELD

This disclosure relates to refrigerant compositions for heating, ventilation, air conditioning, and refrigeration (HVACR) systems. More particularly, this disclosure relates to refrigerant compositions used in working fluids in refrigerant circuits of HVACR systems.

### BACKGROUND

Concern about environmental impact (e.g., ozone depletion) and the approval of the Montreal Protocol have resulted in a movement to replace ozone depleting refrigerants such as chlorofluorocarbons (CFCs) and hydrochlorofluorocarbons (HCFCs). Refrigerants, such as hydrofluorocarbons (HFCs) and hydrofluoroolefins (HFOs) have been utilized as replacements for previous refrigerants containing CFCs and HFCs. However, there has been recent movement (e.g., the Kigali Amendment to the Montreal Protocol, the Paris Agreement, United States' Significant New Alternatives Policy (SNAP)) to phase out refrigerants, such as some HFCs, that have a high global warming potential (GWP).

### SUMMARY

In an embodiment, a refrigerant composition for an HVACR system is disclosed.

The refrigerant composition can include a R1150 refrigerant, a R170 refrigerant, and a third refrigerant. The third refrigerant is one of R1270 refrigerant, in which the R1270 refrigerant is greater than zero and less than at or about 56 wt% of the refrigerant composition, and R1132a refrigerant.

In an embodiment, the refrigerant composition has a capacity that is at or about or greater than 75% of the capacity of R23 refrigerant.

In an embodiment, the refrigerant composition has a capacity that is at or about or greater than 125% of the capacity of R23 refrigerant.

In an embodiment, the refrigerant composition has a coefficient of performance that is at or about or greater than 95% of the coefficient of performance of R23 refrigerant.

In an embodiment, the refrigerant composition has a coefficient of performance that is at or about or greater than 100% of the capacity of R23 refrigerant.

In an embodiment, the refrigerant composition has a condenser discharge temperature that is at or about or within 10 K of a condenser discharge temperature of R23 refrigerant.

In an embodiment, the refrigerant composition has a temperature glide of at or about or less than 5K.

In an embodiment, the refrigerant composition has a temperature glide of at or about or less than 2.5K.

In an embodiment, the third refrigerant is the R1270 refrigerant, and the R1270 refrigerant is more than zero and less than at or about 25 wt% of the refrigerant composition.

In an embodiment, the third refrigerant is the R1270 refrigerant, and the R1150 refrigerant is more than zero and less than at or about 36 wt% of the refrigerant composition.

In an embodiment, the third refrigerant is the R1270 refrigerant, and the R1150 refrigerant is more than zero and less than at or about 74 wt% of the refrigerant composition.

In an embodiment, the third refrigerant is the R1270 refrigerant, and the R1150 refrigerant is more than zero and less than at or about 36 wt% of the refrigerant composition.

In an embodiment, the third refrigerant is the R1270 refrigerant, and the R170 refrigerant is at or about or more than 50 wt% of the refrigerant composition.

In an embodiment, the third refrigerant is the R1132a refrigerant, and the R1150 refrigerant is more than zero and at or about or less than 95 wt% of the refrigerant composition.

In an embodiment, the refrigerant composition consists of, consists essentially of, or comprises greater than zero to at or about 56 wt% of R1270, greater than zero to at or about 74 wt% of R1150, and greater than zero and less than 100 wt% of R170. The refrigerant composition may have a capacity that is at or less than 25% different than the capacity of R23.

In an embodiment, the refrigerant composition consists of, consists essentially of, or comprises greater than zero to at or about 25 wt% of R1270, greater than zero to at or about 36 wt% of R1150, and at or about 50 wt% to less than 100 wt% of R170. The refrigerant composition may have a temperature glide of at or about or less than 10K.

In an embodiment, the refrigerant composition consists of, consists essentially of, or comprises at or about 7 wt% to at or about 20 wt% of R1270, greater than zero to at or about 27 wt% of R1150, and at or about 61 wt% to at or about 92 wt% of R170. The refrigerant composition may have a capacity that is at or less than 10% different than the capacity of R23.

In an embodiment, the refrigerant composition consists of, consists essentially of, or comprises greater than zero to at or about or less than 82 wt% of R1132a, greater than zero to less than 100 wt% of R1150, and greater than zero and less than 100 wt% of R170. The refrigerant composition may have a relative COP of at or about or more than 85% of R23.

In an embodiment, the refrigerant composition consists of, consists essentially of, or comprises greater than zero to at or about or less than 62 wt% of R1132a, greater than zero and less than 100 wt% of R1150, and at or about 15 wt% or more than 15 wt% and less than 100 wt% of R170. The refrigerant composition may have a relative COP of at or about or more than 95% of R23.

In an embodiment, the refrigerant composition consists of, consists essentially of, or comprises greater than 0 wt% and at or about or less than 53 wt% of R1 132a, greater than zero to less than 100 wt% of R1150, and at or about or greater than 36 wt% to less than 100 wt% of R170. The refrigerant composition may have a relative COP of at or about or more than 97.5% of R23.

In an embodiment, a method is directed to making a refrigerant composition for an HVACR system. The method includes mixing an amount of R1150 refrigerant, an amount of R170 refrigerant, and an amount of a third refrigerant. The third refrigerant is one of R1270 refrigerant, in which the R1270 refrigerant is greater than zero and less than at or about 56 wt% of the refrigerant composition, and R1132a refrigerant.

In an embodiment, a method is directed to retrofitting an existing refrigerant in an HVACR system. The method includes adding an amount of at least one refrigerant to the existing refrigerant to obtain a retrofit refrigerant composition comprising R1150 refrigerant, R170 refrigerant, and a third refrigerant. The third refrigerant is one of R1270 refrigerant, in which the R1270 refrigerant is greater than zero and less than at or about 56 wt% of the retrofit refrigerant composition, and R1132a refrigerant.

In an embodiment, the retrofit refrigerant composition has a capacity that is at or about or greater than 75% of the capacity of R23 refrigerant.

In an embodiment, the retrofit refrigerant composition has a coefficient of performance that is at or about or greater than 95% of the coefficient of performance of R23 refrigerant.

In an embodiment, the retrofit refrigerant composition has a condenser discharge temperature that is at or about or within 10 K of a condenser discharge temperature of R23 refrigerant.

In an embodiment, the retrofit refrigerant composition has a temperature glide of at or about or less than 5K.

### BRIEF DESCRIPTION OF THE DRAWINGS

Both described and other features, aspects, and advantages of refrigerant compositions, methods of making refrigerant compositions, and methods of retrofitting a refrigerant composition in an HVACR system will be better understood with reference to the following drawings:
Figure 1 is a schematic diagram of a refrigerant circuit of a heating, ventilation, air conditioning, and refrigeration system, according to an embodiment.
Figure 2 is a matrix of refrigerant compositions of R1270, R1150, and R170 that includes plots of relative capacity, relative compressor discharge temperature, and temperature glide, according to an embodiment.
Figure 3 is the matrix of Figure 2 illustrated to show selected refrigerant compositions, according to an embodiment.
Figure 4 is a matrix of refrigerant compositions of R1 132a, R1150, and R170 that includes plots of relative coefficient of performance, relative capacity, and temperature glide, according to an embodiment.
Figure 5 is the matrix of Figure 4 illustrated to show selected refrigerant compositions, according to an embodiment.

The use of the same reference numbers in different Figures indicates same items.

### DETAILED DESCRIPTION

This disclosure relates to refrigerant compositions for heating, ventilation, air conditioning, and refrigeration (HVACR) systems. More particularly, this disclosure relates to refrigerant compositions used in working fluids in refrigerant circuits of HVACR systems.

Refrigerant compositions are disclosed that provide one or more of improved global warming potential (GWP), temperature glide, capacity, coefficient of performance, and flammability over a conventional refrigerant composition, such as R23 refrigerant or R116 refrigerant. In particular, the refrigerant compositions disclosed may provide an improved GWP (e.g., a relatively lower GWP) over said conventional refrigerant composition, such as R23 refrigerant or R116 refrigerant. In some disclosed embodiments, refrigerant compositions can have efficiency (e.g., coefficient of performance (COP)), capacity (CAP), condenser discharge temperature (CDT), and/or other operating parameters similar to said conventional refrigerant compositions, such as R23 refrigerant or R116 refrigerant.

Refrigerant compositions disclosed can be employed in ultra-low temperature HVACR systems. An ultra-low temperature HVACR system is configured to condition a process fluid (e.g., air) to at or below -30 °C. Ultra-low temperature HVACR systems can be configured to condition the process fluid to a temperature that is at or below -30 °C, at or below -40 °C, at or below -50 °C, at or below -60 °C, at or below -80 °C, or the like. In an embodiment, the ultra-low temperature HVACR systems can include multiple refrigerant circuits in cascade (e.g. includes a relatively higher temperature circuit in cascade with a relatively lower temperature circuit). The evaporation temperature of the refrigerant composition in an evaporator of the lower temperature circuit can be, for example, at or below -30 °C, at or below -40 °C, at or below -50, at or below -60 °C, at or below -62 °C, at or below -78 °C, at or below -80 °C, at or below -86 °C, at or below -95 °C, or the like.

The cooled process fluid can be used to cool a conditioned space such as, but not limited to, a space inside of a cold storage facility, a refrigerator, a climate controlled transport unit, or the like. For example, the refrigerant compositions disclosed herein can advantageously provide an improved GWP (e.g., a lower GWP replacement) over conventional refrigerants used in lower/ultra-low temperature HVACR systems relative, such as R23 refrigerant, R116 refrigerant, or the like. It is appreciated that "ultra-low temperature" refers to a temperature of at or below - 50 °C. For example, ultra-low temperature HVACR systems can be HVACR systems that cool the process fluid to at least -50 °C. In one example, an ultra-low temperature HVACR system refers to a HVACR system that can provide cooling to at or below about -62 °C. For example, the above temperatures can be the evaporation temperature of the refrigerant composition in an evaporator of the HVACR system (e.g., having an evaporation temperature of at or below - 50 °C, having an evaporation temperature of at or below about -62 °C).

Methods of making such refrigerant compositions are also described. In some embodiments, the refrigerant compositions can perform similar to an existing refrigerant compositions. The existing refrigerant compositions can be R23, R116, R508A, R508B, or the like. For example, the existing refrigerant compositions have an evaporation temperature of at or below -50 °C (e.g., an evaporation temperature at or below about -62 °C).

Also described herein are methods of retrofitting a working fluid containing an existing refrigerant(s) to achieve such refrigerant compositions. Retrofitting can be used for servicing, controlling flammability, decreasing GWP, improving performance, and/or improving safety of HVACR system designed for a working fluid having an existing refrigerant composition.

Refrigerant compositions are described for lowering GWP, decreasing toxicity, reducing flammability (e.g., lower burning velocity (BV)), and/or providing an increased lower flammable limit (LFL) in HVACR systems. Methods are described for making such refrigerant compositions. Refrigerant compositions and methods of making are described which can be used for retrofitting an existing refrigerant in an HVACR system to obtain a retrofit refrigerant composition. The retrofitting of the existing refrigerant composition may be used for servicing, controlling flammability, decreasing GWP, improving performance, and/or improving safety of an HVACR system.

R1270 refrigerant (i.e., propylene) ("R1270") has a low GWP of about 2.

R1150 refrigerant (i.e., ethylene) ("R1 150") has a low GWP of about 4.

R170 refrigerant (i.e., ethane) ("R170") has a low GWP of about 1.

R1132a refrigerant (i.e., 1,1-difluoroethylene) ("R1 132a") has a GWP of less than 1.

R116 refrigerant (i.e., hexafluoroethane) ("R116") has a high GWP of about 12,200.

R23 refrigerant (i.e., trifluoromethane) ("R23") a high GWP of about 14,800.

Conventional refrigerant compositions can be legacy refrigerants, or blends thereof, that have a relatively higher GWP, higher safety risk, or the like. For example, such conventional refrigerant composition may be planned on being phased out due to their environmental impact, safety concerns, or the like. For example, conventional refrigerant compositions can include R23, R116, R508A, R508B, or the like.

Embodiments disclosed are directed to refrigerant compositions, methods of retrofitting a refrigerant composition, and methods of making a refrigerant composition. The refrigerant compositions include R1150, R170, and a third refrigerant. The third refrigerant is R1270 or R1132a. The refrigerant compositions may replace a conventional refrigerant, such as R23 and R116, while having a GWP lower than R23, R116, R508A, R508B, or the like.

In some embodiments described herein, a refrigerant composition has performance properties (e.g., COP, CAP, CDT, temperature glide, flammability, and/or the like) that are the same and/or similar to a conventional refrigerant composition. For example, this may allow the refrigerant composition to be used in an existing HVACR system without significant modifications to the HVACR system and/or replacing of components of the HVACR system (i.e., can be a drop-in replacement).

In some embodiments describe herein, a refrigerant composition has one or more improved performance properties than an existing refrigerant composition. In an embodiment, the refrigerant composition has improved performance by having a smaller temperature glide. A smaller temperature glide can provide a more uniform temperature distribution in a condenser and/or an evaporator in which the refrigerant composition is used. A more uniform temperature distribution in a condenser/evaporator can provide improved operational control and/or an increased rate of heat transfer in the condenser/evaporator. In an embodiment, the refrigerant composition has improved performance by having a higher COP and/or a higher CAP than an existing refrigerant composition. A higher COP and a higher CAP provide improved efficiency and capacity to the HVACR system, respectively. In another embodiment, the refrigerant composition has COP and/or CAP that is the same or similar to the existing refrigerant composition that is being replaced, retrofitted, and/or the like. In such an embodiment, the refrigerant composition can be employed to provide a lower GWP, an improve safety, to mitigate shortage, and/or the like, of the existing refrigerant composition.

In some embodiments described herein, a refrigerant composition is a retrofit refrigerant composition that replaces an existing refrigerant in an HVACR system. The retrofit refrigerant composition is obtained by adding at least one refrigerant to the existing refrigerant. For example, the HVACR system is designed to use the existing refrigerant. In an embodiment, the retrofit refrigerant composition can have the same or similar capacity as the existing refrigerant composition that is being retrofitted. For example, retrofit refrigerant compositions have at least a lower GWP and/or an improved performance (e.g., same or better COP, CAP, CDT, and/or the like) compared to the existing refrigerant being replaced.

In an embodiment, the refrigerant composition consists of, consists essentially of, or comprises R1150, R170, and a third refrigerant. The third refrigerant is R1270 or R1132a. The refrigerant composition may be mixed with, for example, impurities, contaminations, additives, or the like.

In an embodiment, an existing refrigerant composition in an HVACR system is retrofitted to achieve a retrofit refrigerant composition. The retrofitting includes adding an amount of at least one refrigerant to the existing refrigerant to achieve the retrofit refrigerant composition. The retrofit refrigerant composition is an embodiment of a refrigerant composition disclosed herein. The existing refrigerant composition includes one or more of R1270, R1132a, R1150, and R170.

In some embodiments, the refrigerant compositions may be selected to have one or more desired refrigerant properties such as, but not limited to, GWP, relative CAP (capacity relative to a conventional refrigerant), temperature glide, COP, relative CDT (condenser discharge temperature relative to a conventional refrigerant), or the like, or a combination thereof.

In some embodiments, the refrigerant compositions can have a capacity that is, for example, at or about or less than 50%, 25%, 15%, 10%, 5%, or 1% different from the capacity of R23.

In some embodiments, the refrigerant compositions can have a capacity that is, for example, at or about or less than 50%, 25%, 15%, 10%, 5%, or 1% different from the capacity of R116.

In some embodiments, the refrigerant compositions can have a temperature glide of at or about or less than 20 Kelvin (K). The refrigerant compositions can have a temperature glide of at or about or less than 10K. The refrigerant compositions can have a temperature glide of at or about or less than 5K. The refrigerant compositions can have a temperature glide of at or about or less than 3K. The refrigerant compositions can have a temperature glide of at or about or less than 2K. The refrigerant compositions can have a temperature glide of at or about or less than 1.5K. The refrigerant compositions can have a temperature glide of at or about or less than 1K. The refrigerant compositions can have a temperature glide of at or about or less than 0.5 K.

In some embodiments, the refrigerant compositions can have a COP of at least 0.7 relative to an existing refrigerant composition (e.g., R23, R116, R508A, R508B, or the like). The refrigerant compositions can have a COP of at least 0.8. The refrigerant compositions can have a COP of at least 0.9. The refrigerant compositions can have a COP of at least 0.94. The refrigerant compositions can have a COP of at least 0.95. The refrigerant compositions can have a COP of at least 0.96. The refrigerant compositions can have a COP of at least 0.97. The refrigerant compositions can have a COP of at least 0.975. The refrigerant compositions can have a COP of at least 0.98. The refrigerant compositions can have a COP of at least 0.99. The refrigerant compositions can have a COP of at least 1.0. The refrigerant compositions can have a COP of at least 1.01. The refrigerant compositions can have a COP of at least 1.02. The refrigerant compositions can have a COP of at least 1.025. The refrigerant compositions can have a COP of at least 1.050. The refrigerant compositions can have a COP of at least 1.075. The refrigerant compositions can have a COP of at least 1.09. The refrigerant compositions can have a COP of at least 1.1. The refrigerant compositions can have a COP of at least 1.2. The refrigerant compositions can have a COP of at least 1.5. The refrigerant compositions can have a COP of at least 2.0. The refrigerant compositions can have a COP of at least 3.0.

An HVACR system may be designed to utilize a specific existing refrigerant (e.g., R23, R116, R508A, R508B, or the like). For such an HVACR system to use a refrigerant composition having a CAP, e.g., less than a threshold percentage of the capacity of the specific existing refrigerant, modification to the HVACR system may be required. Such modification may include replacing or modifying the compressor to have a larger volumetric displacement, larger amounts of process fluid, and/or larger temperature differences. Such modification may reduce the efficiency of the HVACR system.

In some embodiments, a refrigerant composition with a capacity that is at or about or greater than 90% of the capacity of the specific existing refrigerant (e.g., R23, R116, R508A, R508B, or the like) may be desired. In an embodiment, a working fluid containing a refrigerant composition with a capacity that is at or about or greater than 95% of the capacity of the specified existing refrigerant (e.g., R23, R116, R508A, R508B, or the like) can result in, for example, an even lesser impact on the efficiency of the HVACR system designed for the specific existing refrigerant (e.g., R23, R116, R508A, R508B, or the like).

In some embodiments, a refrigerant composition with a capacity that is at or about or greater than 50% of the capacity of the specific existing refrigerant (e.g., R23, R116, R508A, R508B, or the like) may be desired. A refrigerant composition can have a capacity that is at or about or greater than 50% of the capacity of the specific existing refrigerant (e.g., R23, R116, R508A, R508B, or the like). A refrigerant composition can have a capacity that is at or about or greater than 75% of the capacity of the specific existing refrigerant (e.g., R23, R116, R508A, R508B, or the like). A refrigerant composition can have a capacity that is at or about or greater than 100% of the capacity of the specific existing refrigerant (e.g., R23, R116, R508A, R508B, or the like). A refrigerant composition can have a capacity that is at or about or greater than 100% of the capacity of the specific existing refrigerant (e.g., R23, R116, R508A, R508B, or the like). A refrigerant composition can have a capacity that is at or about or greater than 125% of the capacity of the specific existing refrigerant (e.g., R23, R116, R508A, R508B, or the like). A refrigerant composition can have a capacity that is at or about or greater than 150% of the capacity of the specific existing refrigerant (e.g., R23, R116, R508A, R508B, or the like). A refrigerant composition can have a capacity that is at or about or greater than 175% of the capacity of the specific existing refrigerant (e.g., R23, R116, R508A, R508B, or the like). A refrigerant composition can have a capacity that is at or about or greater than 200% of the capacity of the specific existing refrigerant (e.g., R23, R116, R508A, R508B, or the like). A refrigerant composition can have a capacity that is at or about or greater than 225% of the capacity of the specific existing refrigerant (e.g., R23, R116, R508A, R508B, or the like). A refrigerant composition can have a capacity that is at or about or greater than 130% of the capacity of the specific existing refrigerant (e.g., R23, R116, R508A, R508B, or the like). A refrigerant composition can have a capacity that is at or about or greater than 150% of the capacity of the specific existing refrigerant (e.g., R23, R116, R508A, R508B, or the like). A refrigerant composition can have a capacity that is at or about or greater than 170% of the capacity of the specific existing refrigerant (e.g., R23, R116, R508A, R508B, or the like). A refrigerant composition can have a capacity that is at or about or greater than 190% of the capacity of the specific existing refrigerant (e.g., R23, R116, R508A, R508B, or the like). A refrigerant composition can have a capacity that is at or about or greater than 210% of the capacity of the specific existing refrigerant (e.g., R23, R116, R508A, R508B, or the like). A refrigerant composition can have a capacity that is at or about or greater than 230% of the capacity of the specific existing refrigerant (e.g., R23, R116, R508A, R508B, or the like).

In an embodiment, an HVACR system may be designed to utilize a specific existing refrigerant (e.g., R23, R116, R508A, R508B, or the like). Such an HVACR system can use a refrigerant composition having a CAP, e.g., within 10% of the capacity of the specific existing refrigerant, with no or minimal impact on the efficiency, and minimal or no modification may be needed.

A refrigerant composition with a capacity that is within at or about or less than 10% from the specified existing refrigerant can result in, for example, a minimal impact on the efficiency of the HVACR system designed for the specific refrigerant. In some embodiments, a refrigerant composition can have a CAP within 10% the capacity of the specific existing refrigerant (e.g., R23, R116, R508A, R508B, or the like). In some embodiments, a refrigerant composition can have a CAP within 5% the capacity of the specific existing refrigerant (e.g., R23, R116, R508A, R508B, or the like). In some embodiments, a refrigerant composition can have a CAP within 3% the capacity of the specific existing refrigerant (e.g., R23, R116, R508A, R508B, or the like). In some embodiments, a refrigerant composition can have a CAP within 2% the capacity of the specific existing refrigerant (e.g., R23, R116, R508A, R508B, or the like). In some embodiments, a refrigerant composition can have a CAP within 1% the capacity of the specific existing refrigerant (e.g., R23, R116, R508A, R508B, or the like).

The performance properties may be relative to the performance properties of R23, R116, R508A, R508B, or the like. In some embodiments, one or more properties of a refrigerant composition may be simulated and/or estimated by a vapor compression thermodynamic cycle tool utilizing Reference Fluid Thermodynamic and Transport Properties Database (REFPROP) of National Institute of Standards and Technology (NIST) to compute thermodynamic properties. It is appreciated that the refrigerant compositions are not limited to retrofit the specific existing refrigerant and can be selected, for example, for an HVACR system designed for the refrigerant compositions disclosed and/or other refrigerant compositions.

With respect to an amount of refrigerant, "about" generally allows for up to 1% variation from the recited value to account for rounding. It should be appreciated that at or about greater than zero to at or about an amount of refrigerant includes at or about the recited amount, and the range of greater than zero to at or about the recited amount. It should be appreciated that at or about an amount of refrigerant to less than 100% of refrigerant includes at or about the recited amount, and the range of less than 100% to at or about the recited amount.

An HVACR system can be used to cool or heat one or more conditioned spaces. For example, an HVACR system can cool an area by performing work on a refrigerant that is in a thermal communication with air, cooling the air. The cooled air may then be circulated to the conditioned spaces to cool the conditioned spaces. In some embodiments, the conditioned space can be a space in a residential, commercial, industrial, public, laboratory building, or the like. In some embodiments, the conditioned space can be a space in a transport unit, such as, a car, a truck, a bus, a train or light rail cart, a martin shipping container, a van, a boat, a ship, or the like.

"Working fluid" is configured to flow in a refrigeration circuit, and a least a portion of the working fluid evaporates and condense to provide heat transfer. The working fluid can include a refrigerant composition that can include two or more components or a mixture of chemical compounds, refrigerants, refrigerant blends, refrigerant compositions, and/or the like. In some embodiments, a refrigerant or refrigerant compositions can be a refrigerant portion of the working fluid that undergone phase chances, for example, between liquid and vapor, in one or more vapor-compression cycles in an HVACR system.

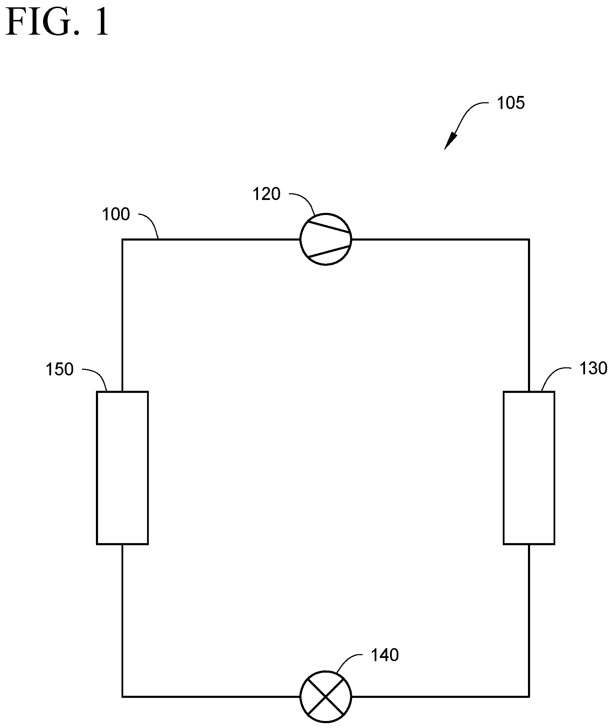

Figure 1 is a schematic diagram of a refrigerant circuit 100 of an HVACR system 105, according to an embodiment. The refrigerant circuit 100 includes a compressor 120, a condenser 130, an expansion device 140, and an evaporator 150. In an embodiment, the refrigerant circuit 100 can be modified to include additional components. For example, in an embodiment, the refrigerant circuit 100 can include one or more economizer heat exchangers, flow control devices, receiver tanks, dryers, suction-liquid heat exchangers, or the like. The refrigeration circuit 100 is a vapor compression circuit. In an embodiment, the refrigeration circuit 100 can have a single stage, two stages, or more than two stages of compression.

The components of the refrigerant circuit 100 are fluidly connected. The refrigerant circuit 100 can be configured as a cooling system (e.g., a fluid chiller of an HVACR, an air conditioning system, and the like) that can be operated in a cooling mode. The refrigerant circuit 100 can be configured to operate as a heat pump system that can run in a cooling mode and/or a heating mode. The refrigerant circuit 100 can be configured to operate in a heating, cooling, dehumidification, refrigeration, and/or the like.

The refrigerant circuit 100 as described applies known principles of gas compression and heat transfer. The refrigerant circuit can be configured to heat or cool a process fluid (e.g., water, air). In an embodiment, the refrigerant circuit 100 may represent a chiller that cools a process fluid such as water or the like. In an embodiment, the refrigerant circuit 100 may represent an air conditioner and/or heat pump that includes a process fluid such as air or the like.

During an exemplary operation of the refrigerant circuit 100, a working fluid flows into the compressor 120 from the evaporator 150 at a relatively lower pressure in a gaseous state. The compressor 120 compresses the gas into a high pressure state, which also heats the gas. After being compressed, the relatively higher pressure and higher temperature gas flows from the compressor 120 to the condenser 130. In addition to the refrigerant flowing through the condenser 130, an external fluid (e.g., external air, external water, chiller water, and the like) also flows through the condenser 130. The external fluid absorbs the heat from the working fluid as it flows through the condenser 130. The working fluid condenses to liquid and then flows into the expansion device 140. The expansion device 140 reduces the pressure of the working fluid. The reduced pressure allows the working fluid to expand and be converted to a mixed vapor and liquid state. The relatively lower temperature, vapor/liquid working fluid then flows into the evaporator 150. A process fluid (e.g., air, water, chiller liquid, or the like) also flows through the evaporator 150. In accordance with known principles, the working fluid absorbs heat from the process fluid as it flows through the evaporator 150. As the working fluid absorbs heat, the working fluid evaporates to vapor. The working fluid then returns to the compressor 120. The above-described process continues while the refrigerant circuit 100 is operated, for example, in a cooling mode.

The refrigerant compositions and methods described herein may be used in the refrigerant circuit 100 of the HVACR system 105. For example, methods of retrofitting an existing refrigeration composition may be applied to the heat circuit 100 of Figure 1. Further, refrigeration compositions as described herein may be used in a working fluid of the refrigerant circuit 100 of Figure 1. Additionally, methods for retrofitting a refrigerant composition described here may be carried out on the working fluid in the refrigerant circuit 100 of Figure 1.

In another embodiment, the refrigerant circuit 100 in Figure 1 may be a lower circuit in a cascade refrigerant cycle of the HVACR system 105. In such an embodiment, the condenser 130 can be cascade heat exchanger disposed in both the refrigerant circuit 100 and a second refrigerant circuit (not shown). For example, the condenser 130 is an evaporator of the second refrigerant circuit that cools the refrigerant in the refrigerant circuit 100 using the second refrigerant in the second refrigerant circuit (e.g., the process fluid in the condenser 130 is a second refrigerant). The working fluid contains a refrigerant composition. In some embodiments, the refrigerant composition can be a portion of the working fluid that undergoes phase changes, for example, between liquid and vapor, in the refrigerant circuit 100. It is appreciated that the refrigerant compositions can consist of, consist essentially of, or comprise R1150, R170, and a third refrigerant. The third refrigerant is R1270 or R1132a. It should be noted that a working fluid may also include one or more additional non-refrigerant components in addition to a refrigerant composition. Additional components may be, for example, impurities, lubricants, refrigeration system additives, tracers, ultraviolet ("UV") dyes, and solubilizing agents. In general, these additional components are present in small amounts relative to the refrigerant composition. For example, up to 3% of each additional component may be present in a working fluid. A working fluid, depending upon its components, may have at or about 5 wt% or less than 5 wt% of some additives, such as lubricants, in a particular location or piece of equipment in a heat transfer circuit. In an embodiment, one or more additional components would be added in addition to the refrigerant composition described below.

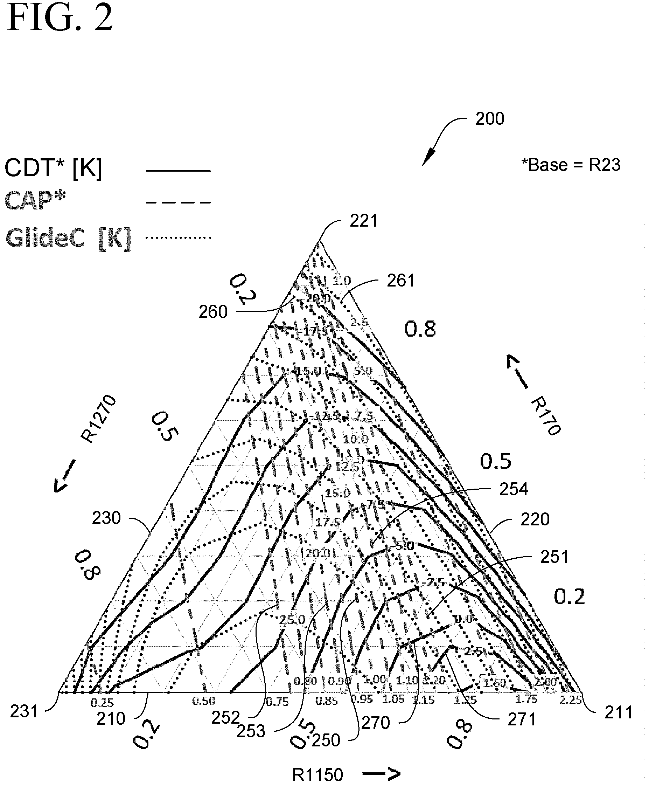

Figures 2-5 each shows a matrix 200, 400 of refrigerant compositions of R1150, R170, and a third refrigerant. In an embodiment, a refrigerant composition may consist or consist essentially of R1150, R170, and the third refrigerant. The third refrigerant is R1270 or R1132A. In each matrix 200, 400, properties of the refrigerant compositions are plotted as a function of the weight percentage (wt%) of each R1150, R170, and the third refrigerant. Properties of the refrigerant compositions represented in the matrices 200, 400 were determined using a thermodynamic model based on experimental results. Each matrix 200, 400 can also be used in a method of making a refrigerant composition and/or in a method of retrofitting an existing refrigerant composition so that produced refrigerant composition or retrofitted refrigerant composition has one or more desired properties

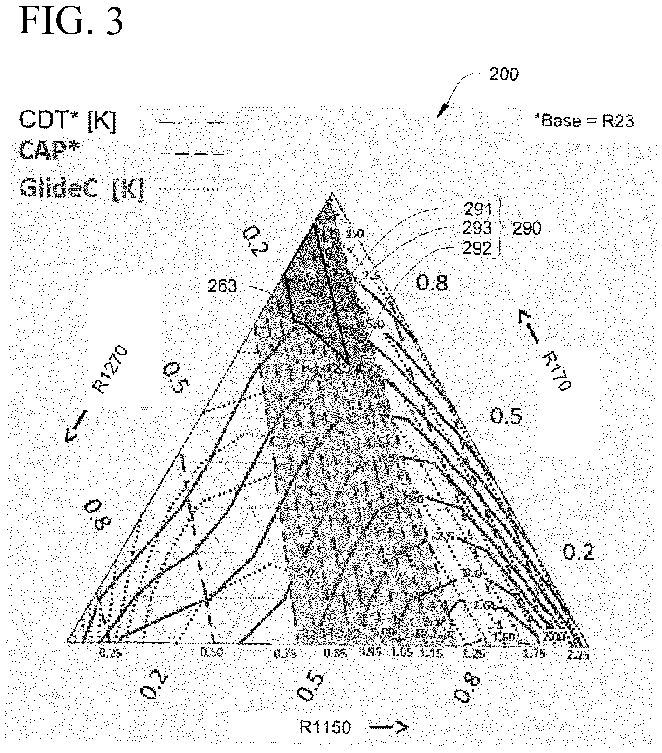

Figures 2 and 3 show the matrix 200 of refrigerant compositions of R1150, R170, and R1270 and plots of relative CDT, relative capacity, and temperature glide. The relative CDT and the relative capacity in matrix 200 are relative to R23. In Figures 2 and 3, each side 210, 220, 230 of the triangle corresponds to weight percentages (wt%) of R1150, R170, and R1270, respectively. R1270 is the third refrigerant in refrigerant compositions of matrix 200. Each vertex 211, 221, 231 corresponds to a composition of 100 wt% R1150, 100 wt% R170, and 100 wt% R1270, respectively. For example, vertex 211 corresponds to a composition of 100 wt% R1150, vertex 221 corresponds to a composition of 100 wt% R170, and vertex 231 corresponds to a composition of 100% R1270.

The properties (e.g., CDT, CAP, and temperature glide) of the refrigerant compositions at the corresponding weight percentages of R1150, R170, and R1270 can be determined using the matrix 200.

Relative CDT is a difference between condenser discharge temperature of the refrigerant composition and the condenser discharge temperature of the R23 (e.g., change in discharge temperature between the refrigerant composition and R23 when used in a same refrigerant circuit). The CDT relative to R23 is denoted as "CDT*" and "*base = R23" in Figures 2 and 3.

Relative CAP is the percentage difference between the capacity of the refrigerant composition and the capacity of R23. The CAP relative to R23 is denoted by "CAP*" and "*base = R23" in Figures 2 and 3.

Temperature glide is temperature difference between the saturated vapor temperature and the saturated liquid temperature at a pressure. In Figures 2 and 3, temperature glide is determined at the operating pressure of the condenser (e.g., condenser 130 of Figure 1) and is denoted by "GlideC" in Figures 2 and 3.

The matrix 200 of Figure 2 includes lines that represent properties of the refrigerant compositions with respect to the weight percentages of R1150, R170, and R1270, respectively. In an embodiment, the refrigerant compositions represented in Figure 2 can be selected based on capacity relative to an existing refrigerant, composition, blend, e.g., R23, R116, R508A, R508B, or the like. For example, line 250 (or line segment 250) in Figure 2 represents refrigerant compositions having the same capacity as R23. Line 251 (or line segment 251) represents refrigerant compositions that have a capacity at or about 125% of the capacity of R23. Line 252 (or line segment 252) represents refrigerant composition that have a capacity at or about 75% of the capacity of R23. For example, refrigerant compositions on or bounded by lines 251 and 252 in Figure 2 have a capacity that is at or within about 25% of the capacity of R23. For example, refrigerant compositions on or bounded by lines 253 and 254 in Figure 2 have a capacity that is at or within about 10% of the capacity of R23.

In an embodiment, the refrigerant compositions represented in Figure 2 can be selected based on the temperature glide of the refrigerant composition. It is appreciated that smaller temperature glide is generally preferable for a refrigerant composition in a working fluid of an HVACR system. For example, a temperature glide at or about or less than a certain degree can be desired in an embodiment. In Figure 2, line 260 (or line segments 260) represents refrigerant compositions that have a temperature glide of at or about 5K. For example, line 261 (or line segments 261) represents refrigerant compositions that have a temperature glide of at or about 2.5K. The area bounded by lines 260 and 261 represent refrigerant compositions that have the temperature glide from at or about 2.5K to at or about 5K.

In an embodiment, the refrigerant compositions represented in Figure 2 can be selected based on the CDT of the refrigerant composition. For example, a relative CDT of at or about or less than a certain degree (e.g., 5 K or 5 degrees Kelvin) can be desired in an embodiment. For example, line 270 (or line segments 270) represents refrigerant compositions in Figure 2 that have a relative CDT that is at or about 0K (i.e., the condenser discharge temperature of the refrigerant composition is the same or similar to the condenser discharge temperature for R23). Line 271 (or line segments 271) represents refrigerant compositions in Figure 2 that have a relative CDT of is at or about 2.5K (i.e., the condenser discharge temperature of the refrigerant composition is at or about 2.5K above the condenser discharge temperature of R23). The area bounded by line 270 and line 271 represent refrigerant compositions in Figure 2 that have a relative CDT from at or about 0K to at or about 2.5K.

Figure 3 is the matrix 200 of Figure 2 illustrated to show selected refrigerant compositions, according to an embodiment. As shown in Figure 3, the refrigerant compositions can include (i.e., consist of, consist essentially of, or comprise) R1150, R170, and R1270.

The refrigerant compositions can be selected based on one or more of the refrigerant composition properties such as the capacity relative to R23, temperature glide, and/or CDT.

In an embodiment, a desired set of properties for a useful refrigerant includes a capacity that is at or less than 25% different than the capacity of R23. In such an embodiment, a range of useful refrigerants refrigerant compositions are in area 290 in Figure 3. Area 290 includes area 291, area 292, and 293. The useful refrigerant compositions in area 290 include greater than zero to at or about 56 wt% of R1270, greater than zero to at or about 74 wt% of R1150, and greater than zero and less than 100 wt% of R170. In an embodiment, the refrigerant compositions in area 290 can be useful to replace R23, R116, R508A, R508B, or the like, or retrofit an HVACR system configured to use R23, R116, R508A, R508B, or the like.

In an embodiment, the desired set of properties may further include having a temperature glide of at or about or less than 10K. In such an embodiment, the useful compositions in area 290 may include preferred refrigerant compositions in area 291 that have a temperature glide of at or about or less than 10K. Area 291 is separate from area 292 by line 263 that corresponds to refrigerant compositions having a glide of 10K. The first preferred refrigerant compositions in area 291 include greater than zero to at or about 25 wt% of R1270, greater than zero to at or about 36 wt% of R1150, and at or about 50 wt% to less than 100 wt% of R170.

In an embodiment, another desired set of properties may further include a capacity that is at or less than 10% different than the capacity of R23. In such an embodiment, a second preferred compositions in area 290 may include refrigerant compositions represented in area 293. The refrigerant compositions in area 293 include at or about 7 wt% to at or about 20 wt% of R1270, greater than zero at or about 27 wt% of R1150, and at or about 61 wt% to at or about 92 wt% of R170.The ranges of R1150, R170, and R1270 for a refrigerant composition may be based on having one or more properties (e.g., CDT described herein, a CAP described herein, a temperature glide described herein) as discussed herein. In an embodiment, the one or more properties are a CDT, a capacity, and a temperature glide discussed herein. In an embodiment, the one or more properties are a CDT and a capacity discussed herein. In an embodiment, the one or more properties are a CDT and a temperature glide discussed herein. In an embodiment, the one or more properties are a capacity and a temperature glide discussed herein. In an embodiment, the one or more properties are a COP, a capacity, or a temperature glide discussed herein. The ranges of R1150, R170, and R1270 for the refrigerant composition having the one or more properties can be selected according to Figure 2.

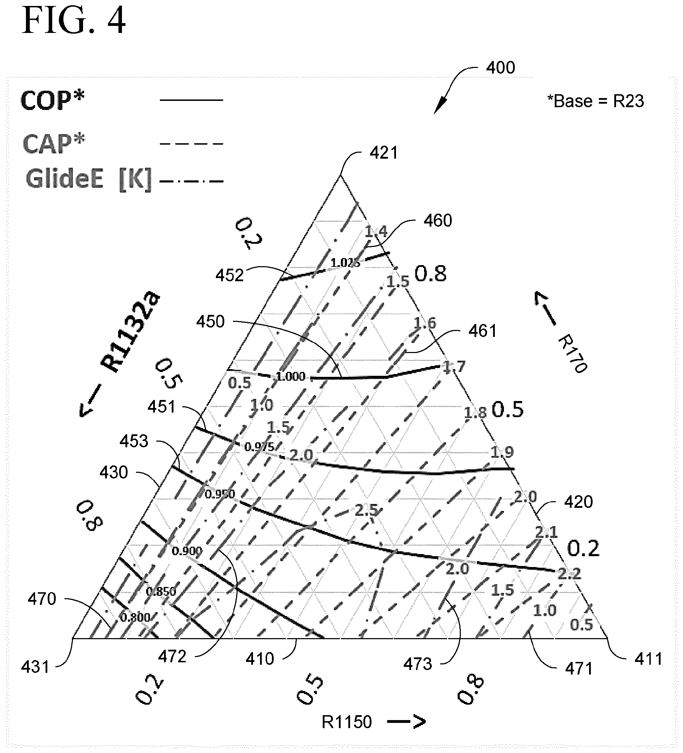

Figure 4 shows a matrix 400 of refrigerant compositions of R1150, R170, and R1132a and plots of relative COP, relative CAP, and temperature glide according to an embodiment. The relative COP and relative CAP in Figure 4 are relative to R23.

As shown in Figure 4, each side 410, 420, 430 of the triangle corresponds to weight percentages (wt%) of R1150, R170, and R1132a, respectively. Each vertex 411, 421, 431 corresponds to a composition of 100 wt% R1150, 100 wt% R170, and 100 wt% R1132a, respectively. For example, vertex 411 corresponds to a composition of 100 wt% R1150; vertex 421 corresponds to a composition of 100 wt% R170; and vertex 431 corresponds to a composition of 100 wt% R1132a.

The properties (e.g., relative COP, relative CAP, and temperature glide) of a refrigerant composition with a weight percent of R1150, R170, and R1132a can be determined using the matrix 400.

Relative COP is the percentage difference between coefficient of performance of the refrigerant composition and the coefficient of performance of the R23. The relative COP is denoted by "COP*" and "*base = R23" in Figures 4 to 5.

Relative CAP is the percentage difference between the capacity of the refrigerant composition and the capacity of R23. The relative CAP is denoted by "CAP*" and "*base = R23" in Figure 4.

Temperature glide is temperature difference between the saturated vapor temperature and the saturated liquid temperature at a pressure. In Figures 4 to 5, the pressure is the operating pressure of the evaporator (e.g., evaporator 150 of Figure 1) and denoted by "GlideE" in Figures 4 to 5.

The matrix 400 of Figure 4 includes lines that represent properties of the refrigerant compositions (e.g., capacity relative to R23, temperature glide, and coefficient of performance relative to R23) with respect to the weight percentages of R1150, R170, and R1132a, respectively.

In an embodiment, the refrigerant compositions represented in Figure 4 can be selected based on COP relative to R23. For example, line 450 (or line segment 450) in Figure 4 represents the refrigerant compositions having the same COP as R23 (e.g., COP being 1). Line 451 (or line segment 451) represents the refrigerant compositions of Figure 4 providing a COP of 2.5% below the coefficient of performance of R23. Line 452 (or line segment 452) represents the refrigerant compositions of Figure 4 providing a COP of 2.5% above the coefficient of performance of R23. In an embodiment, the coefficient of performance of the refrigerant compositions can be at or less than 2.5% relative to R23 as illustrated in Figure 4 as represented by the area between lines 451 and 452. In an embodiment, the coefficient of performance of the refrigerant compositions can be at or about 95% or more than 95% relative to R23 as illustrated in Figure 4 as represented by the area above line 453.

Having a coefficient of performance that is the same or similar to the coefficient of performance of R23, the refrigerant compositions can be used in a working fluid for an HVACR system designed for R23 with little to no modification to the HVACR system equipment.

In an embodiment, the refrigerant compositions represented in Figure 4 can be selected based on capacity relative to R23. For example, line 460 (or line segment 460) in Figure 4 represents refrigerant compositions having a CAP of at or about 40% above the capacity of R23. Line 461 (or line segment 461) represents the refrigerant compositions of Figure 4 having a capacity at or about 160% of the capacity of R23. As illustrated in Figure 4C, the refrigerant compositions having a capacity of at or about 40% to at or about 60% greater than the captivity of R23 are represented by the area between line 460 and line 461.

In an embodiment, the refrigerant compositions represented in Figure 4 can be selected based on the temperature glide of the refrigerant composition. Line 470 (or line segment 470) and line 471 (or line segment 471) respectively represent the refrigerant compositions having a glide of at or about 1K. Line 472 (or line segment 472) and line 473 (or line segment 473) respectively represent the refrigerant compositions of Figure 4 having a glide of 2K. In an embodiment, the refrigerant compositions having a glide from at or about 1K to at or about 2K are represented by the area between line 470 and line 472, and the area between 471 and 473.

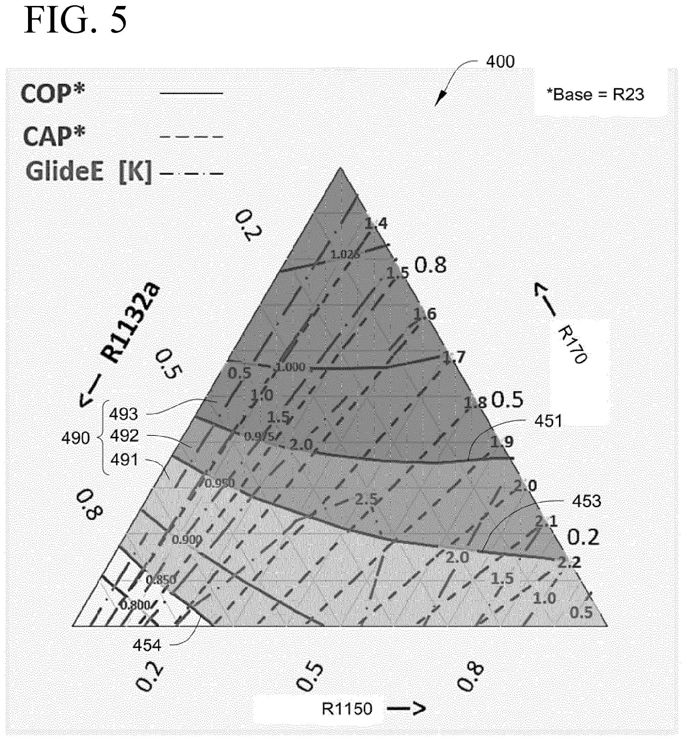

Figure 5 is the matrix 400 of Figure 4 illustrated to show selected refrigerant compositions, according to an embodiment. As shown in Figure 5, the refrigerant compositions include R1150, R170, and R1132a.

The refrigerant compositions can be selected based on one or more of the refrigerant composition properties such as the relative COP to R23, the relative CAP to R23, and/or temperature glide.

In an embodiment, a desired set of properties for a useful refrigerant composition includes a relative COP of at or about or more than 85% of R23, a predetermined range of relative CAP to R23, and/or a predetermined range of temperature glide. In such an embodiment, a range of useful refrigerant compositions are in area 490 in Figure 5. Area 490 includes area 491 and area 492. The area 490 can include the area right and up from the line 454. Line 454 represent represents the refrigerant compositions of Figure 5 providing a COP of at or about 85% of the coefficient of performance of R23.

The useful refrigerant compositions in area 490 include greater than zero to at or about or less than 82 wt% of R1 132a, greater than zero to less than 100 wt% of R1150, and greater than zero and less than 100 wt% of R170. In an embodiment, the refrigerant compositions in area 490 can be useful to replace R23, R116, R508A, and/or R508B, or retrofit an HVACR system configured to use R23, R116, R508A, and/or R508B or a similar refrigerant.

In an embodiment, a set of desired properties may further include having a relative COP of at or about or more than 95% of R23. In such an embodiment, first preferred refrigerant compositions having a relative COP at or about or more than 95% of R23 are represented by area 492 and area 493. Areas 492 and 493 are separate from area 491 by line 453 that represents refrigerant compositions with relative COP at or about 95% of R23.

The first preferred refrigerant compositions in areas 492 and 493 include greater than zero to at or about or less than 62 wt% of R1132a, greater than zero and less than 100 wt% of R1150, and at or about 15 wt% or more than 15 wt% and less than 100 wt% of R170. In an embodiment, the refrigerant compositions in areas 491 and 492 can be preferred to replace R23, R116, R508A, R508B, or retrofit an HVACR system configured to use R23, R116, R508A, R508B or a similar refrigerant.

In an embodiment, a set of desired properties may further include having a relative COP of at or about or more than 97.5% of R23. In such an embodiment, second preferred refrigerant compositions having a relative COP at or about or more than 97.5% of R23 are represented by area 493. Area 493 is separated from area 492 by line 451 that represents refrigerant compositions with relative COP at or about 97.5% of R23.

The second preferred refrigerant compositions in area 493 includes greater than 0 wt% and at or about or less than 53 wt% of R1 132a, greater than zero to less than 100 wt% of R1150, and at or about or greater than 36 wt% to less than 100 wt% of R170.

In an embodiment, the refrigerant compositions in area 490 can be preferred to replace R23, R116, R508A, R508B, or the like, or retrofit an HVACR system configured to use R23, R116, R508A, R508B, or the like.

The ranges of R1150, R170, and R1132a for a refrigerant composition may be based on having one or more properties (e.g., COP discussed herein, a capacity discussed herein, and/or a temperature glide discussed herein) discussed herein. In an embodiment, the one or more properties are a COP, a capacity, and a temperature glide discussed herein. In an embodiment, the one or more properties are a COP and a capacity discussed herein. In an embodiment, the one or more properties are a COP and a temperature glide discussed herein. In an embodiment, the one or more properties are a capacity and a temperature glide discussed herein. In an embodiment, the one or more properties are a COP, a capacity, or a temperature glide as discussed herein. The ranges of R1150, R170, and R1132a for a refrigerant composition that includes the one or more properties can be selected according to Figure 4.

Methods of making one or more refrigerant compositions according to the refrigerant compositions shown and described in Figures 2-5 are disclosed. The method can include mixing one or more chemicals, one or more refrigerants, and/or one or more existing refrigerant compositions to obtain the refrigerant compositions disclosed in Figures 2-5.

Methods of retrofitting an HVACR system having an existing refrigerant composition to obtain a refrigerant composition according to the refrigerant compositions shown and described in Figures 2-5 are disclosed. Refrigerant compositions prepared for replacing and/or retrofitting an existing refrigerant composition or a system designed for, or using, an existing refrigerant composition can be referred to as a retrofit refrigerant composition. For example, the existing refrigerant composition can be R150, R170, R1132a, R1150, R23, or the like, or using one or two of R1150, R170, and a third refrigerant. The third refrigerant can be R1270 or R1132a. The method can include replacing at least a portion of the existing refrigerant composition to obtain a retrofitted refrigerant composition.

In an embodiment, the retrofitting of the HVACR system can include removing (e.g., draining) an amount of the existing composition from the HVACR system and adding one or more refrigerants (e.g., R1270, R1150, R170, and R1132a) to obtain the retrofitted refrigerant composition that is one of the refrigerant compositions shown and described herein. For example, an HVACR system using R1150 can be retrofitted by draining an amount of an existing refrigerant composition out from the HVACR system and adding R170 and the third refrigerant (e.g., R1270 or R1132a) in to the HVACR so that the working fluid resulted in the HVACR system can have a refrigerant composition disclosed in Figures 2-5. For example, this HVACR system can be designed to use R23, but currently using R1150 to lower GWP. This HVACR system can be retrofitted to improve the capacity and/or efficiency with little to no effect to the GWP of the resulting working fluid, relative to the GWP of R1150.

In an embodiment, a HVACR system can be designed to use an existing refrigerant composition (e.g., R23, R116, R508A, R508B, or the like) and be retrofitted to, e.g., lower GWP. The retrofitting of this HVACR system can include removing (e.g., removing) the existing refrigerant composition from the HVACR and the adding of one or more refrigerants can be the adding of one of the refrigerant compositions disclosed herein. For example, this retrofitting can be configured to have a comparable capacity (e.g., to the previous refrigerant composition), COP, or the like, while lowering the GWP.

In some embodiments, the performance characteristics of the refrigerant compositions may be simulated and/or estimated by a thermodynamic cycle calculation tool, such as using NIST's REFPROP for thermodynamic properties. It is noted that capacity for a refrigerant composition may be determined, for example, in a measurement performed in a lab and/or in a computer based simulation based on previous measurements and/or determined properties of the individual refrigerants in the refrigerant composition.

For example, operation conditions for providing capacity and compressor discharge temperature relative to R23 may be provided using the operating conditions in Table 1 below. In the table, T_{Evap} is the saturation temperature of R23 in the evaporator. T_{Cond} is the saturation temperature of R23 in the condenser. DTSH is discharge temperature superheat, or the compressor suction superheat. DTSC is a subcooling at the inlet to the expender or expansion device. η_{Cmpr} is the coefficient of performance of the compressor using R23.

**Table 1: Operating Conditions for performance relative to R23**

| | |
|---|---|
| T_{Evap} | -86.1°C |
| T_{Cond} | -23.9°C |
| DTSH | 6.7 °C |
| DTSC | 0 °C |
| η_{Cmpr} | 0.6 |

| | |
|---|---|
| *Condenser/Evaporator heat exchanger glide weighting at midpoint conditions | |

In some embodiments, a refrigerant composition designed to replace an existing refrigerant composition to be used in an HVACR system designed for the existing refrigerant compositions can be referred to as retrofit refrigerant or retrofit refrigerant composition. In some embodiments, a working fluid having an existing refrigerant composition can be retrofitted to obtain the refrigerant compositions disclosed.

In an embodiment, a working fluid having the existing refrigerant compositions can be retrofitted to obtain a working fluid having the disclosed refrigerant composition, for example, by mixing in one or more chemical and/or one or more refrigerants according to the disclosed refrigerant compositions. In an embodiment, a working fluid having the disclosed refrigerant compositions can be used in an HVACR system designed for an existing refrigerant composition. Aspects: Any of aspects 1-18 can be combined with any one of aspects 19-29. Aspect 30 or 31 can be combined with any one of aspects 1-29.
Aspect 1. A refrigerant composition for an HVACR system comprising:
   R1150 refrigerant;
   R170 refrigerant; and
   a third refrigerant being one of:
      R1270 refrigerant that is greater than zero and less than at or about 56 wt% of the refrigerant composition, and
      R1132a refrigerant.
Aspect 2. The refrigerant composition of aspect 1, wherein the refrigerant composition has a capacity that is at or about or greater than 50% of the capacity of an existing refrigerant composition.
Aspect 3. The refrigerant composition of aspects 1 or 2, wherein the refrigerant composition has a capacity that is at or about or greater than 75% of the capacity of an existing refrigerant composition.
Aspect 4. The refrigerant composition of any one of aspects 1-3, wherein the refrigerant composition has a capacity that is at or about or greater than 125% of the capacity of an existing refrigerant composition.
Aspect 5. The refrigerant composition of any one of aspects 1-4, wherein the refrigerant composition has a capacity that is at or about or greater than 130% of the capacity of an existing refrigerant composition.
Aspect 6. The refrigerant composition of any one of aspects 1-5, wherein the refrigerant composition has a coefficient of performance that is at or about or greater than 150% of the coefficient of performance of an existing refrigerant composition.
Aspect 7. The refrigerant composition of any one of aspects 1-6, wherein the refrigerant composition has a coefficient of performance that is at or about or greater than 85% of the coefficient of performance of an existing refrigerant composition.
Aspect 8. The refrigerant composition of any one of aspects 1-7, wherein the refrigerant composition has a coefficient of performance that is at or about or greater than 95% of the coefficient of performance of an existing refrigerant composition.
Aspect 9. The refrigerant composition of any one of aspects 1-8, wherein the refrigerant composition has a coefficient of performance that is at or about or greater than 97.5% of the coefficient of performance of an existing refrigerant composition.
Aspect 10. The refrigerant composition of any one of aspects 1-9, wherein the refrigerant composition has a coefficient of performance that is at or about or greater than 98% of the coefficient of performance of an existing refrigerant composition.
Aspect 11. The refrigerant composition of any one of aspects 1-10, wherein the refrigerant composition has a coefficient of performance that is at or about or greater than 99% of the coefficient of performance of an existing refrigerant composition.
Aspect 12. The refrigerant composition of any one of aspects 1-11, wherein the refrigerant composition has a coefficient of performance that is at or about or greater than 100% of the capacity of an existing refrigerant composition.
Aspect 13. The refrigerant composition of any one of aspects 1-12, wherein the refrigerant composition has a condenser discharge temperature that is at or about or within 10 K of a condenser discharge temperature of an existing refrigerant composition.
Aspect 14. The refrigerant composition of any one of aspects 1-13, wherein the refrigerant composition has a temperature glide of at or about or less than 10K.
Aspect 15. The refrigerant composition of any one of aspects 1-14, wherein the refrigerant composition has a temperature glide of at or about or less than 5K.
Aspect 16. The refrigerant composition of any one of aspects 1-15, wherein the refrigerant composition has a temperature glide of at or about or less than 2.5K.
Aspect 17. The refrigerant composition of any one of aspects 1-16, wherein the existing refrigerant composition is R23 refrigerant, R116 refrigerant, R508A refrigerant, or R508B refrigerant.
Aspect 18. The refrigerant composition of any one of aspects 1-17, wherein the refrigerant composition is a retrofit refrigerant composition.
Aspect 19. A refrigerant composition for an HVACR system comprising:
   R1150 refrigerant;
   R170 refrigerant; and
   R1270 refrigerant, wherein the R1270 refrigerant is greater than zero and less than at or about 56 wt% of the refrigerant composition.
Aspect 20. A refrigerant composition for an HVACR system comprising:
   R1150 refrigerant;
   R170 refrigerant; and
   R1270 refrigerant, wherein the R1270 refrigerant is greater than zero and less than at or about 25 wt% of the refrigerant composition.
Aspect 21. A refrigerant composition for an HVACR system comprising:
   R1150 refrigerant;
   R170 refrigerant; and
   R1270 refrigerant, wherein the R1150 refrigerant is greater than zero and less than at or about 74 wt% of the refrigerant composition.
Aspect 22. A refrigerant composition for an HVACR system comprising:
   R1150 refrigerant;
   R170 refrigerant; and
   R1270 refrigerant, wherein the R1150 refrigerant is more than zero and less than at or about 36 wt% of the refrigerant composition.
Aspect 23. A refrigerant composition for an HVACR system comprising:
   R1150 refrigerant;
   R170 refrigerant; and
   R1270 refrigerant, wherein the R170 refrigerant is greater than zero and less than 100 wt% of the refrigerant composition.
Aspect 24. A refrigerant composition for an HVACR system comprising:
   R1150 refrigerant;
   R170 refrigerant; and
   R1270 refrigerant, wherein the R170 refrigerant is at or about or more than 50 wt% the refrigerant composition.
Aspect 25. A refrigerant composition for an HVACR system comprising:
   R1150 refrigerant;
   R170 refrigerant; and
   R1132a refrigerant, wherein the R1132a refrigerant at or about and less than 82 wt % the refrigerant composition.
Aspect 26. A refrigerant composition for an HVACR system comprising:
   R1150 refrigerant;
   R170 refrigerant; and
   R1132a refrigerant, wherein the R1132a refrigerant at or about and less than 62 wt % the refrigerant composition.
Aspect 27. A refrigerant composition for an HVACR system comprising:
   R1150 refrigerant;
   R170 refrigerant; and
   R1132a refrigerant, wherein the R1132a refrigerant at or about and less than 53 wt % the refrigerant composition.
Aspect 28. A refrigerant composition for an HVACR system comprising:
   R1150 refrigerant;
   R170 refrigerant; and
   R1132a refrigerant, wherein the R170 refrigerant at about or greater than 15 wt% and less than 100 wt% of the refrigerant composition.
Aspect 29. A refrigerant composition for an HVACR system comprising:
   R1150 refrigerant;
   R170 refrigerant; and
   R1132a refrigerant, wherein the R170 refrigerant at about or greater than 36 wt% and less than 100 wt% of the refrigerant composition.
Aspect 30. A method of making a refrigerant composition for an HVACR system, the method comprising:
   mixing an amount of R1150 refrigerant, an amount of R170 refrigerant, and an amount of a third refrigerant being one of R1270 refrigerant and R1132a refrigerant.
Aspect 31. A method of retrofitting an HVACR system having an existing refrigerant composition, comprising:
   adding an amount of at least one refrigerant to the existing refrigerant to obtain a retrofit refrigerant composition comprising R1150 refrigerant, R170 refrigerant, and a third refrigerant, the third refrigerant being one of:
   R1270 refrigerant that is greater than zero and less than at or about 56 wt% of the retrofit refrigerant composition,
   R1132a refrigerant.
Aspect 32. The method of aspect 19, wherein the refrigerant composition has a refrigerant composition of any one of aspects 1-27.
Aspect 33. The refrigerant composition of any one of aspects 1-27, wherein the exiting refrigerant composition is R23 refrigerant.

The terminology used herein is intended to describe particular embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. It should be appreciated that a range for a component in a refrigerant composition may be formed by combining an upper limit, a lower limit, and/or an amount described herein for said component. This Specification and the embodiments described are exemplary only, with the true scope and spirit of the disclosure being indicated by the claims that follow.

## Claims

1. A refrigerant composition for an HVACR system comprising:
R1150 refrigerant;
R170 refrigerant; and
a third refrigerant being one of:
R1270 refrigerant that is greater than zero and less than at or about 56 wt% of the refrigerant composition, and
R1132a refrigerant.

2. The refrigerant composition of claim 1, wherein the refrigerant composition has a capacity that is at or about or greater than 75% of the capacity of R23 refrigerant, and optionally
wherein the refrigerant composition has a capacity that is at or about or greater than 125% of the capacity of R23 refrigerant.

3. The refrigerant composition of any one of claims 1 and 2, wherein the refrigerant composition has a coefficient of performance that is at or about or greater than 95% of the coefficient of performance of R23 refrigerant, and optionally
wherein the refrigerant composition has a coefficient of performance that is at or about or greater than 100% of the capacity of R23 refrigerant.

4. The refrigerant composition of any one of claims 1-3, wherein the refrigerant composition has a condenser discharge temperature that is at or about or within 10 K of a condenser discharge temperature of R23 refrigerant.

5. The refrigerant composition of any one of claims 1-4, wherein the refrigerant composition has a temperature glide of at or about or less than 5K, and optionally
wherein the refrigerant composition has a temperature glide of at or about or less than 2.5K.

6. The refrigerant composition of any one of claims 1-5, wherein the third refrigerant is the R1270 refrigerant, and the R1270 refrigerant is more than zero and less than at or about 25 wt% of the refrigerant composition, and optionally
wherein the third refrigerant is the R1270 refrigerant, and the R1150 refrigerant is more than zero and less than at or about 36 wt% of the refrigerant composition.

7. The refrigerant composition of any one of claims 1-6, wherein the third refrigerant is the R1270 refrigerant, and the R1150 refrigerant is more than zero and less than at or about 74 wt% of the refrigerant composition, and optionally
the R1150 refrigerant is more than zero and less than at or about 36 wt% of the refrigerant composition.

8. The refrigerant composition of any one of claims 1-7, wherein the third refrigerant is the R1270 refrigerant, and the R170 refrigerant is at or about or more than 50 wt% of the refrigerant composition.

9. The refrigerant composition of any one of claims 1-8, wherein the third refrigerant is the R1132a refrigerant, and the R1132a refrigerant is more than zero and at or about or less than 82 wt% of the refrigerant composition, and optionally
the R1132a refrigerant is more than zero and at or about or less than 62 wt% of the refrigerant composition, and further optionally
the R1132a refrigerant is more than zero and at or about or less than 53 wt% of the refrigerant composition.

10. The refrigerant composition of any one of claims 1-9, wherein the third refrigerant is the R1132a refrigerant, and the R170 refrigerant is at or about or greater than 15 wt% to less than 100 wt% of the refrigerant composition, and optionally
wherein the third refrigerant is the R1132a refrigerant, and the R170 refrigerant is at or about or greater than 36 wt% to less than 100 wt% of the refrigerant composition.

11. A method of making a refrigerant composition for an HVACR system, the method comprising:
mixing an amount of R1150 refrigerant, an amount of R170 refrigerant, and an amount of a third refrigerant, the third refrigerant being one of:
R1270 refrigerant that is greater than zero and less than at or about 56 wt% of the refrigerant composition, and
R1132a refrigerant.

12. A method of retrofitting an existing refrigerant in an HVACR system, comprising:
adding an amount of at least one refrigerant to the existing refrigerant to obtain a retrofit refrigerant composition comprising R1150 refrigerant, R170 refrigerant, and a third refrigerant, the third refrigerant being one of:
R1270 refrigerant that is greater than zero and less than at or about 56 wt% of the retrofit refrigerant composition, and
R1132a refrigerant.
